# DEMANDE DE BREVET EUROPEEN

(11) **EP 4 652 856 A1**
(43) Date de publication de la demande: **26.11.2025**
(21) Numéro de dépôt: 24305813.8
(22) Date de dépôt: 24.05.2024
(51) Int. Cl.: A23P 30/20, A21C 3/02, A21C 3/04, A21C 11/16

(54) **DISPOSITIF DE FABRICATION DE PATES ALIMENTAIRES ET PROCEDE CORRESPONDANT**

(71) Demandeur: Lustucru Frais, 69008 Lyon (FR)
(72) Inventeur: DREUX, Vincent, 69110 Sainte Foy les Lyon (FR)
(74) Mandataire: Cabinet Didier Martin

(57) **Abrégé**

- Dispositif de fabrication de pâtes alimentaires et procédé correspondant.
- L'invention concerne un dispositif (1) de fabrication de pâtes alimentaires comprenant une cuve (2) conçue pour contenir une composition pâteuse, des buses d'extrusion (3) associées à ladite cuve (2) pour être alimentées en composition pâteuse, ainsi qu'au moins un premier et un deuxième rouleau motorisé de laminage (6, 7) disposés à l'intérieur de la cuve (2) pour forcer la composition pâteuse contenue dans la cuve (2) à travers lesdites buses d'extrusion (3), ledit premier rouleau motorisé (6) présentant une forme de révolution fuselée.
- Dispositifs et procédés de fabrication de produits alimentaires.

## Description

La présente invention se rapporte au domaine général des produits alimentaires, et plus précisément au domaine technique des pâtes alimentaires.

La présente invention concerne en particulier un dispositif et un procédé de fabrication de pâtes alimentaires destinées à être réchauffées et/ou cuites avant d'être consommées.

Les pâtes alimentaires sont des aliments particulièrement prisés des consommateurs, en particulier lorsqu'elles se présentent sous la forme de palets, boudins, ou encore boulettes, comme par exemple les tortellinis, les ravioles...

Ces produits alimentaires peuvent être fabriqués de manière artisanale, mais aussi et surtout de façon industrielle, afin en particulier de répondre à la demande importante des consom mateurs.

Or la fabrication industrielle de pâtes alimentaires s'avère être une opération relativement complexe, notamment si l'on cherche à concilier cadence de fabrication élevée et obtention d'un produit présentant des propriétés organoleptiques et apparence optimales.

Une difficulté réside en particulier dans la maîtrise, à cadence élevée, de la forme des produits. Les lignes de fabrication connues ne permettent en effet généralement pas de garantir à la fois une cadence de fabrication industrielle élevée et un caractère uniforme et maîtrisé des produits fabriqués.

Les objets assignés à l'invention visent par conséquent à apporter une réponse aux besoins et problématiques susvisés, et à proposer ainsi de nouveaux dispositif et procédé de fabrication de pâtes alimentaires dont la conception permet une production uniforme et homogène à des cadences élevées.

Un autre objet de l'invention vise à proposer un nouveau dispositif de fabrication de pâtes alimentaires de construction particulièrement compacte.

Un autre objet de l'invention vise à proposer un nouveau dispositif de fabrication de pâtes alimentaires de conception particulièrement simple et robuste.

Un autre objet de l'invention vise à proposer de nouveaux dispositif et procédé de fabrication de pâtes alimentaires particulièrement fiables et bon marché.

Un autre objet de l'invention vise à proposer un nouveau dispositif de fabrication de pâtes alimentaires dont la conception facilite la maintenance et le nettoyage.

Un autre objet de l'invention vise à proposer de nouveaux dispositif et procédé de fabrication de pâtes alimentaires permettant de garantir l'uniformité des propriétés organoleptique des produits fabriqués.

Les objets assignés à l'invention sont atteints à l'aide d'un dispositif de fabrication de pâtes alimentaires destinées à être réchauffées et/ou cuites avant d'être consommées, ledit dispositif comprenant une cuve conçue pour contenir une composition pâteuse à partir de laquelle les pâtes alimentaires sont destinées à être formées, des buses d'extrusion associées à ladite cuve pour être alimentées en composition pâteuse provenant de ladite cuve, ainsi qu'au moins un premier et un deuxième rouleau motorisé de laminage disposés à l'intérieur de la cuve pour forcer la composition pâteuse contenue dans la cuve à travers lesdites buses d'extrusion, ledit premier rouleau motorisé présentant une forme de révolution fuselée.

Les objets assignés à l'invention sont également atteints à l'aide d'un procédé de fabrication de pâtes alimentaires destinées à être réchauffées et/ou cuites avant d'être consommées, ledit procédé comprenant une étape de réception, dans une cuve, d'une composition pâteuse à partir de laquelle les pâtes alimentaires sont destinées à être formées, ainsi qu'une étape de laminage de ladite composition pâteuse, au moyen d'au moins un premier et un deuxième rouleau motorisé de laminage disposés à l'intérieur de la cuve, pour forcer la composition pâteuse contenue dans la cuve à travers des buses d'extrusion associées à ladite cuve, ledit premier rouleau motorisé présentant une forme de révolution fuselée.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, parmi lesquels :
La figure 1 illustre, de manière schématique, un détail de réalisation d'un dispositif de fabrication conforme à l'invention, selon une vue en perspective de face.

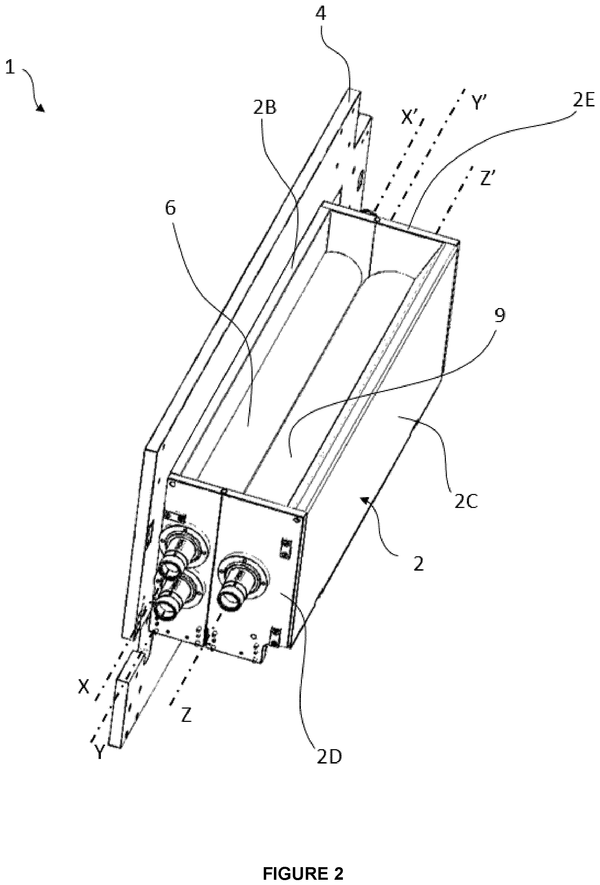

La figure 2 illustre, selon une vue en perspective arrière de dessus, le détail de réalisation du dispositif de la figure 1.
La figure 3 illustre, selon une vue en perspective coupée, un détail de la figure 1.
La figure 4 illustre, selon une coupe transversale, un détail du dispositif des figures 1 à 3.

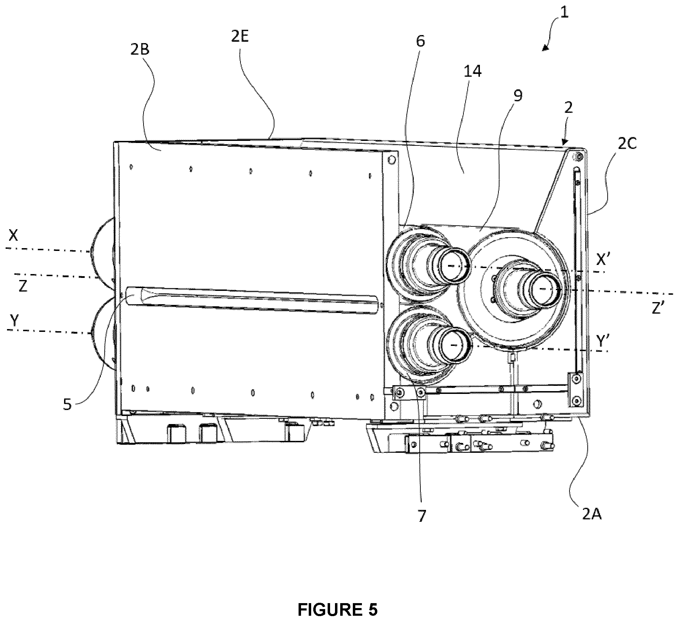

La figure 5 est une vue sensiblement analogue à celle de la figure 1, à la différence près que des pièces ont été omises (savoir la plaque frontale qui porte les buses d'extrusion et une paroi latérale de la cuve).
La figure 6 est identique à la figure 5, à la différence près que la paroi avant de la cuve a été omise.
La figure 7 illustre, selon une schématique de dessus, le premier rouleau du dispositif de fabrication selon l'invention.
La figure 8 illustre, selon une vue schématique de face, un agencement de rouleaux de laminage qui ne correspond pas à l'invention et qui met en oeuvre deux rouleaux motorisés de laminage de forme cylindrique droite, avec une représentation schématique du profil de pression appliquée entre eux.
La figure 9 illustre, selon une vue schématique de face, les premiers et deuxième rouleaux motorisés de laminage mis en oeuvre par le dispositif de fabrication selon l'invention, avec une représentation schématique du profil de pression appliquée entre eux.

L'invention concerne un dispositif 1 de fabrication de pâtes alimentaires. Le dispositif 1 de fabrication selon l'invention est donc avantageusement un dispositif de pastification, pour fabriquer des pâtes alimentaires. Le dispositif 1 est avantageusement un dispositif de fabrication industrielle automatisé, conçu pour assurer de préférence une fabrication de pâtes en continu.

Les pâtes alimentaires fabriquées au moyen du dispositif 1 selon l'invention sont destinées à être réchauffées et/ou cuites avant d'être consommées. Il s'agit donc de pâtes alimentaires qui ne sont pas prévues pour être consommées, mangées, en l'état, mais qui nécessitent au contraire une opération préalable de réchauffage et/ou de cuisson afin de développer pleinement leurs qualités organoleptiques. Les pâtes alimentaires en question peuvent être réchauffées ou cuites par immersion dans un liquide chaud, comme par exemple de l'eau portée à ébullition. Alternativement, elles peuvent être destinées à être réchauffées ou cuites à la poêle, c'est-à-dire être poêlées, en présence par exemple d'un corps gras (huile végétale, beurre...). Au sens de l'invention, le terme « *pâte alimentaire* » n'est pas limité à une définition légale ou normative, et concerne tout aliment obtenu à partir d'un mélange qui inclut au moins une farine et/ou une semoule de céréale et un liquide d'hydratation. Avantageusement, lesdites pâtes alimentaires fabriquées au moyen du dispositif 1 selon l'invention sont destinées à être conservées au réfrigérateur (par exemple à une température comprise entre 0°C et 4°C) avant cuisson et consommation, et sont destinées par exemple à être vendues au rayon « *frais* » des magasins. Lesdites pâtes alimentaires fabriquées au moyen du dispositif 1 selon l'invention sont avantageusement des pâtes farcies, comme par exemple des ravioles ou des tortellinis, c'est-à-dire qu'elles englobent un coeur de farce dont elles sont fourrées. Par exemple, la farce en question peut être une préparation comprenant du fromage ou une spécialité fromagère, et / ou une purée de légume(s) et / ou de la viande hachée, *etc.*

Lesdites pâtes alimentaires sont plus précisément destinées à être formées à partir d'une composition pâteuse. Cette dernière est avantageusement fabriquée par malaxage et cuisson d'un mélange formé à partir au moins d'une part d'une farine et/ou d'une semoule d'au moins une céréale contenant des protéines capables de former du gluten et d'autre part d'un liquide d'hydratation. À l'issue du malaxage et de la cuisson, de préférence simultanés, dudit mélange, est obtenue une substance molle, malléable, qui se présente sous la forme d'une masse cohésive, sensiblement homogène, présentant la consistance d'une pâte, avec en particulier une capacité d'écoulement. La mise en oeuvre d'une céréale (ou d'un mélange de céréales) qui contient des protéines (typiquement des prolamines et des glutamines) capable de former du gluten confère à la composition pâteuse une certaine élasticité, laquelle contribue avantageusement notamment à une bonne tenue des pâtes alimentaires lors du réchauffage ou de la cuisson, et à l'obtention d'une texture relativement ferme et élastique des pâtes après réchauffage ou cuisson de ces dernières. De préférence, ladite céréale est du blé. Ladite farine de céréales avantageusement mise en oeuvre pour obtenir la composition pâteuse est alors préférentiellement une farine de blé tendre, tandis que ladite semoule de céréales avantageusement mise en oeuvre pour obtenir la composition pâteuse est préférentiellement une farine de blé dur. Bien évidemment, d'autres céréales peuvent être mises en oeuvre, comme par exemple l'orge, l'épeautre, le seigle, ou encore l'avoine, cette liste n'étant pas limitative.

Le mélange à partir duquel est formé la composition pâteuse peut inclure en outre d'autres ingrédients en plus de la farine et/ou de la semoule de céréales et du liquide d'hydratation. Ces ingrédients complémentaires peuvent inclure par exemple des oeufs, du lait, du gluten, des légumes ou extraits de légumes, ou encore des aromates, ou tout autre adjuvant.

Selon un mode de réalisation préférentiel particulier, le mélange à partir duquel est formé la composition pâteuse inclut avantageusement un féculent, comme par exemple du tubercule de *Solanum tuberosum.* Dans ce cas, le mélange en question comprend préférentiellement des flocons (préférentiellement déshydratés) et/ou de la poudre et/ou des granules de tubercules de *Solanum tuberosum,* ou encore une purée de tubercule de *Solanum tuberosum* (préparation humide de tubercule de *Solanum tuberosum* écrasé), mélangés avec la farine et/ou la semoule de céréales et le liquide d'hydratation, pour former par exemple des produits en forme de boulettes ou boudins.

De préférence, le liquide d'hydratation est de l'eau, mais il peut alternativement s'agir d'un autre liquide, par exemple du lait ou un liquide d'origine végétale, ou tout autre liquide permettant, en étant dosé de manière appropriée, l'obtention d'une composition de consistance pâteuse. Le liquide d'hydratation peut éventuellement être déjà inclus, en tout ou partie, dans certains des autres ingrédients (par exemple dans de la purée de tubercule de *Solanum tuberosum*)*.*

De préférence, lesdites pâtes alimentaires sont des pâtes fraîches avec un taux d'humidité qui est supérieur à 12 % en masse, de façon préférentielle supérieur à 20 % en masse, et de façon encore plus préférentielle supérieur à 30 % en masse.

Avantageusement, les pâtes alimentaires fabriquées au moyen du dispositif 1 de fabrication selon l'invention se présentent sous la forme de boulettes, boudins et/ou palets formés à partir de la composition pâteuse, et qui sont éventuellement farcis ou fourrés, comme évoqué précédemment, avec une farce qui peut être une préparation comprenant du fromage ou une spécialité fromagère, et / ou une purée de légume(s) et / ou de la viande hachée. Lesdites pâtes alimentaires forment par exemple des tortellinis ou des ravioles.

Par exemple, dans le cas où les pâtes alimentaires fabriquées au moyen du dispositif 1 sont sous forme de boulettes ou boudins, le mélange permettant d'obtenir la composition pâteuse est formé à partir au moins de :
- 15 % à 40 % en masse de farine et/ou de semoule de céréales ;
- 10 à 25 % en masse de flocons de tubercule de *Solanum tuberosum* déshydraté,
- 40 à 60 % en masse d'eau.

Ledit mélange est en revanche dépourvu d'agent levant (ou agent de levage), qu'il s'agisse d'un agent de levage chimique (poudre à lever ou levure chimique) ou naturelle (levure) de sorte que la composition pâteuse est avantageusement obtenue sans levage biologique (et donc sans fermentation) ou chimique.

Conformément à l'invention, le dispositif 1 de fabrication de pâtes alimentaires comprend une cuve 2 conçue pour contenir ladite composition pâteuse à partir de laquelle les pâtes alimentaires sont destinées à être formées. Ladite cuve 2 est donc capable de retenir en son sein la composition pâteuse, et en particulier de l'empêcher de s'écouler de façon incontrôlée en dehors de la cuve 2. La cuve 2 forme ainsi avantageusement un réceptacle suffisamment étanche pour recevoir la composition pâteuse. Pour autant, le réceptacle en question peut présenter, comme illustré aux figures, une ouverture supérieure libre permettant d'amener la composition pâteuse dans la cuve 2, laquelle forme ainsi une enceinte de réception avantageusement ouverte sur l'extérieur au niveau de sa partie supérieure. La cuve 2 forme ainsi un réceptacle qui permet de charger facilement une masse de composition pâteuse dans le dispositif 1, de manière automatique. La cuve 2 est avantageusement réalisée en un matériau métallique, par exemple en acier inoxydable pour à la fois résister aux contraintes mécaniques liées au processus de fabrication et limiter les risques en matière sanitaire et d'hygiène.

Avantageusement, ladite cuve 2 comprend un fond 2A à partir duquel s'élève au moins une paroi avant 2B et une paroi arrière 2C opposée, qui s'étendent avantageusement parallèlement l'une à l'autre, de préférence sensiblement verticalement, comme illustré aux figures. De préférence la cuve 2 comprend également deux parois latérales 2D, 2E qui s'étendent avantageusement parallèlement l'une à l'autre, de préférence sensiblement verticalement, et relient entre elles lesdites parois avant 2B et arrière 2C, pour former avec ces dernières et avec le fond 2A un réceptacle ouvert dans sa partie supérieure.

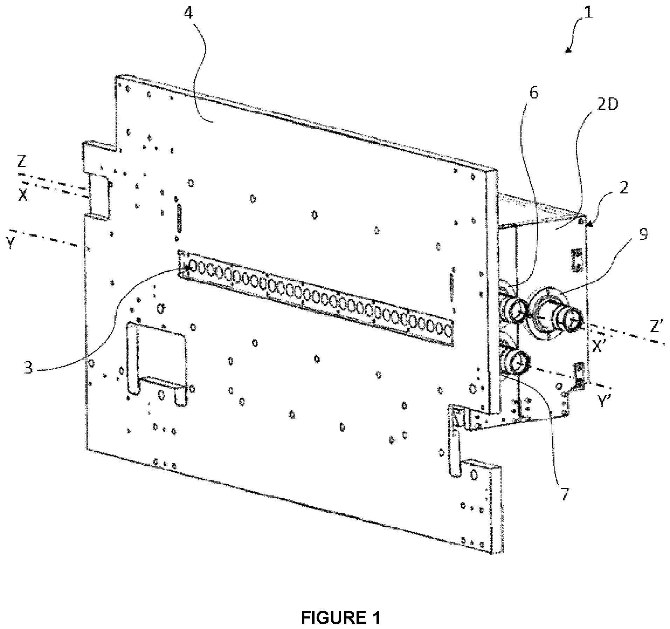

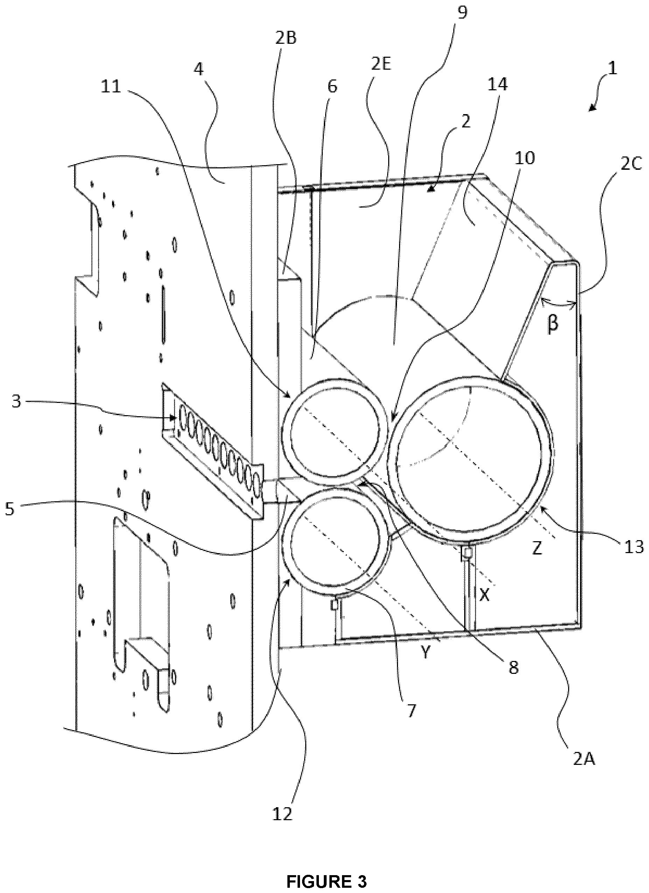

Comme illustré notamment par les figures 1 et 3, le dispositif 1 de fabrication selon l'invention comprend également des buses d'extrusion 3 qui sont associées à la cuve 2 pour être alimentées en composition pâteuse provenant de ladite cuve 2. Les buses d'extrusion 3 sont ainsi en communication fluidique avec l'intérieur de la cuve 2 (comme cela ressort en particulier de la figure 3), pour permettre un écoulement de la composition pâteuse contenue dans la cuve 2 par les buses d'extrusion 3, vers l'extérieur de la cuve 2. Les buses d'extrusion 3 se présentent avantageusement, comme illustré aux figures, sous la forme d'orifices, par exemple de forme circulaire, ménagés à travers l'épaisseur d'une plaque 4 (par exemple métallique) qui forme une filière d'extrusion. Ladite paroi avant 2B est ainsi interposée entre l'intérieur de la cuve 2 et la filière d'extrusion 4 qui porte les buses d'extrusion 3.

Lesdites buses d'extrusion 3 sont avantageusement disposées en rang, les unes à côté et à distance des autres, comme illustré. Ledit rang de buses d'extrusion 3 est avantageusement rectiligne et horizontal, comme illustré aux figures. Il est cependant parfaitement envisageable de prévoir une pluralité de rangs, et/ou de recourir à un ou plusieurs rangs qui s'étendent selon des directions rectilignes autres qu'horizontales, ou encore selon des profils curvilignes, sans pour autant que l'on sorte du cadre de l'invention.

Avantageusement, dans le cas où le dispositif 1 de fabrication est destiné à fabriquer des pâtes alimentaires en forme de boulettes, boudins et/ou palets par exemple, il comprend dans ce cas un poste de formage (non illustré) de boulettes, boudins et/ou palets à partir de ladite composition pâteuse, ledit poste de formage étant disposé en sortie desdites buses d'extrusion 3. Le poste de formage en question comprend par exemple un dispositif permettant de découper les extrudats issus de chacune des buses d'extrusion 3 en portions élémentaires et d'assurer un formage desdites portions élémentaires (par exemple par moulage) pour obtenir lesdites boulettes, boudins et/ou palets.

Dans le cas où le dispositif 1 de fabrication est destiné à fabriquer des pâtes alimentaires farcies, ledit dispositif de fabrication est avantageusement conçu pour associer la composition pâteuse avec une farce (ou garniture). Ladite association de la composition pâteuse et de la farce est effectuée par le dispositif 1 par exemple par co-extrusion de la composition pâteuse et de la farce, ce qui permet d'associer de manière rapide, simple et efficace la composition pâteuse et la farce, la composition pâteuse venant avantageusement envelopper la farce. Avantageusement, ladite co-extrusion correspond à un assemblage, une combinaison, de la composition pâteuse et de la farce par poussage conjoint de ces dernières au travers de filières ou buses d'extrusion. On obtient de la sorte avantageusement des boulettes, boudins et / ou palets farcis (ou fourrés), et par exemple des boudins cylindriques aux extrémités fermées et d'un poids unitaire préférentiellement compris entre 6 g et 12 g environ, farce incluse. Avantageusement, de tels boulettes, boudins et / ou palets peuvent être formés de 20 % à 50 % en masse de farce (par exemple, 30 % en masse) et de 50 % à 80 % en masse de composition pâteuse (par exemple, 70 % en masse). Des proportions différentes peuvent toutefois bien évidemment être mises en oeuvre, selon notamment la nature de la composition pâteuse et / ou de la farce, ou encore selon le profil organoleptique et / ou nutritionnel recherché.

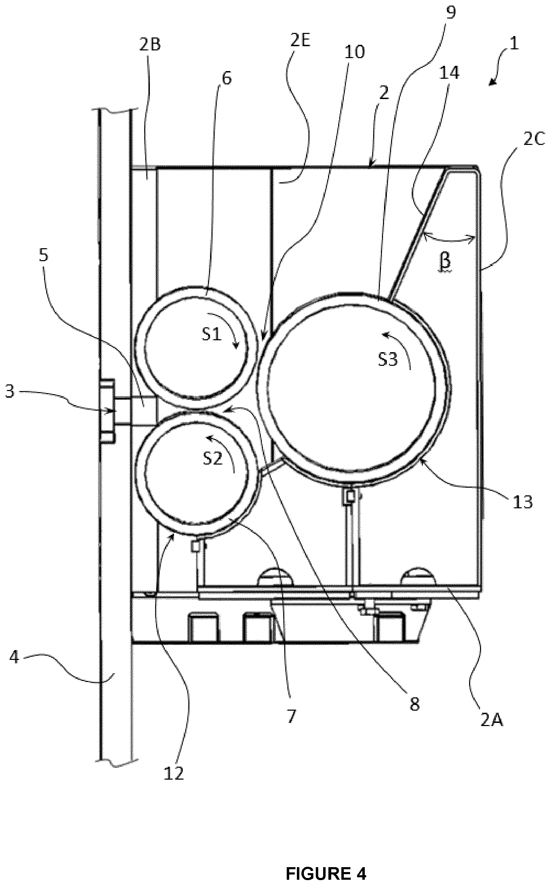

Avantageusement, le dispositif 1 comprend une lumière 5 longiligne qui est ménagé à travers la paroi avant 2B de la cuve 2 et est abouchée auxdites buses d'extrusion 3. En l'espèce, la plaque 4, qui forme avantageusement la filière d'extrusion, est préférentiellement plaquée contre la paroi avant 2B, de sorte que les buses d'extrusion 3 sont mises en communication avec la lumière 5 (cf. figure 4). La lumière 5 forme avantageusement une fente qui traverse toute l'épaisseur de la paroi avant 2B, pour mettre en communication l'intérieur de la cuve 2 avec l'extérieur. La forme de la fente est avantageusement conjuguée à celle du rang de buses d'extrusion 3. Par exemple, comme illustré aux figures, la lumière 5 se présente sous la forme d'une fente allongée rectiligne et sensiblement horizontale, disposée au droit du rang de buses d'extrusion 3. Ladite lumière 5 longiligne peut présenter un caractère continu, par exemple sous la forme d'une fente continue comme illustré aux figures, ou alternativement peut présenter un caractère discret, sous la forme par exemple d'une rangée d'orifices disposés les uns à côté des autres et mutuellement espacés.

Comme illustré aux figures, le dispositif 1 comprend en outre au moins un premier rouleau motorisé de laminage 6 ainsi qu'un deuxième rouleau motorisé de laminage 7 qui sont tous deux disposés à l'intérieur de la cuve 2, en regard l'un de l'autre, pour forcer la composition pâteuse contenue dans la cuve 2 à travers lesdites buses d'extrusion 3. En d'autres termes, lesdits premier et deuxième rouleaux motorisés de laminage 6, 7 sont disposés au voisinage l'un de l'autre, parallèlement l'un à l'autre, pour définir entre eux un premier espace interstitiel (premier entrefer 8) dans lequel est forcée la composition pâteuse sous l'effet de la rotation concomitante desdits premier et deuxième rouleau 6, 7, entraînant ainsi le laminage de la composition pâteuse entre lesdits premier et deuxième rouleaux 6, 7. Ainsi, lesdits premier et deuxième rouleaux 6, 7 sont adjacents, pour délimiter entre eux le premier entrefer 8 qui permet d'acheminer la composition pâteuse jusqu'aux buses d'extrusion 3, afin de la forcer à travers ces dernières, tout en calibrant le débit de composition pâteuse sur toute la rangée des buses d'extrusion 3, afin d'assurer une alimentation uniforme et simultanée de ces dernières. Les premier et deuxième rouleaux motorisés de laminage 6, 7, qui s'étendent parallèlement l'un à l'autre de façon adjacente, constituent en définitive un moyen de laminage qui permet d'assurer le déplacement d'une quantité contrôlée et uniforme de composition pâteuse à travers toutes les buses d'extrusion 3.

Le premier rouleau motorisé de laminage 6 est monté à rotation selon un premier axe de rotation X-X'. Plus précisément, le premier rouleau de laminage 6 est pourvu d'un arbre coaxial audit premier axe de rotation X-X', ledit arbre étant relié à un moteur pour entraîner en rotation ledit premier rouleau 6 selon un premier sens de rotation S1. Le deuxième rouleau motorisé de laminage 7 est lui aussi monté à rotation, selon un deuxième axe de rotation Y-Y'. Le deuxième rouleau de laminage 7 est lui aussi pourvu d'un arbre coaxial audit deuxième axe de rotation Y-Y', ledit arbre étant relié à un moteur pour entraîner en rotation ledit deuxième rouleau 7 selon un deuxième sens de rotation S2. Lesdits premier et deuxième axes de rotation X-X', Y-Y' sont avantageusement parallèles, et inscrits dans un même plan qui est avantageusement un plan vertical.

Afin d'entraîner un déplacement de la composition pâteuse prise dans le premier entrefer 8 entre les premier et deuxième rouleaux motorisés de laminage 6, 7 vers l'avant, c'est-à-dire vers les buses d'extrusion 3, lesdits premier et deuxième rouleaux motorisés de laminage 6, 7 sont avantageusement contrarotatifs, c'est-à-dire que les premier et deuxième sens S1, S2 sont opposés. La composition pâteuse est ainsi à la fois écrasée localement entre le premier et le deuxième rouleau motorisé de laminage 6, 7, et poussée vers l'avant, pour la forcer à passer à travers la lumière 5 puis les buses d'extrusion 3. Le premier entrefer 8 ménagé entre les premier et deuxième rouleaux motorisés 6, 7 s'étend ainsi avantageusement sensiblement au droit desdites buses d'extrusion 3. Par exemple, conformément à la configuration illustrée aux figures, le premier entrefer 8 s'inscrit au moins en partie dans un plan sensiblement horizontal qui passe par les buses d'extrusion 3. Avantageusement, ledit premier entrefer 8 correspond à une distance entre lesdits premier et deuxième rouleaux 6, 7 comprise entre 0,5 et 5 mm, de façon encore plus préférentielle entre 1 et 3 mm.

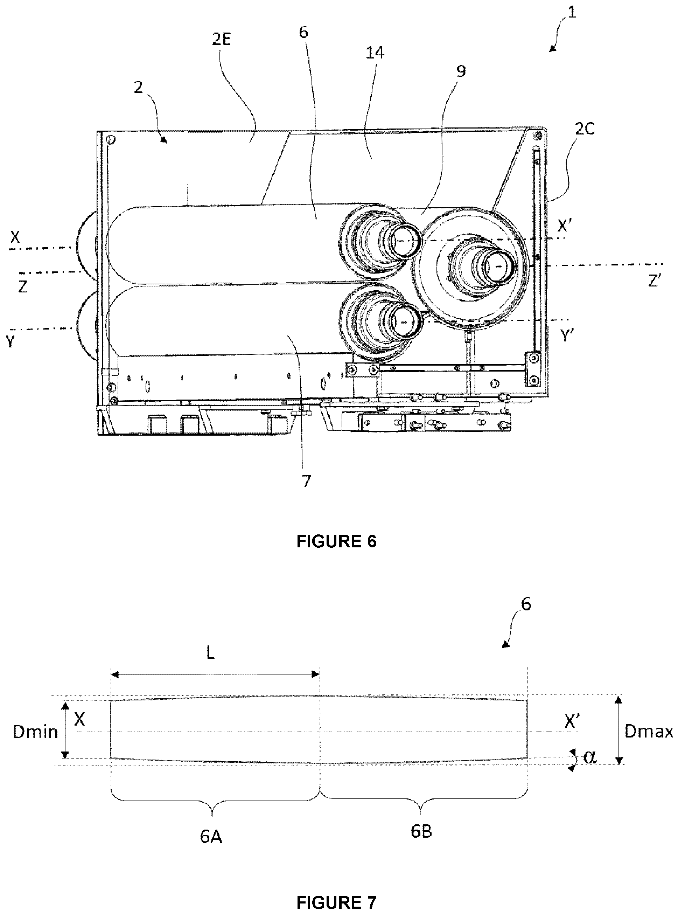

Conformément à l'invention, ledit premier rouleau motorisé 6 présente une forme de révolution fuselée, c'est-à-dire, comme illustré par la figure 7, une forme bombée, avec un diamètre de rouleau qui présente une valeur minimum Dmin aux extrémités du premier rouleau 6 et qui augmente progressivement à partir de chacune des deux extrémités du premier rouleau 6 jusqu'à atteindre une valeur maximale Dmax au milieu du rouleau 6, lequel est avantageusement symétrique par rapport à un plan médian perpendiculaire au premier axe X-X'. En d'autres termes, le premier rouleau motorisé 6 est renflé vers son milieu, et s'amincit en allant vers ses extrémités, selon une forme de fuseau. Une telle forme renflée au milieu et effilée aux deux extrémités, qui confère un profil bombé au premier rouleau 6, permet d'assurer une alimentation homogène des buses 3 en composition pâteuse, c'est-à-dire une alimentation sensiblement uniforme sur toute la longueur du rang de buses d'extrusion 3, en limitant les effets de bord liés à une contre-pression exercée sur la composition pâteuse par les parois de l'enceinte formée par la cuve 2. Il a en effet été identifié, et c'est là l'un des mérites de l'invention, qu'il existe un effet de bord néfaste au niveau de l'extrémité des premier et deuxième rouleaux 6, 7, en raison de la proximité desdites extrémités avec la paroi de la cuve 2 (en l'espèce les parois latérales 2D, 2E). La paroi de la cuve 2 conduit en effet à l'exercice d'une sorte de « *contre-pression* » qui affecte le laminage au niveau de l'extrémité des premier et deuxième rouleaux 6, 7, conduisant à pousser une quantité trop faible de composition pâteuse dans les buses d'extrusion 3 situées vers les extrémités du rang de buses, par rapport aux autres buses. Le recours à un premier rouleau motorisé 6 présentant une forme de révolution fuselée permet de surmonter cette problématique, et de compenser l'effet de bord lié à la contre-pression exercée localement sur la composition pâteuse par les parois de la cuve 2, ce qui permet d'alimenter toutes les buses d'extrusion 3 de la même manière, selon une distribution uniforme, constante, sur toute la longueur de la rangée de buses d'extrusion 3.

Avantageusement, le premier rouleau motorisé 6 comprend deux tronçons 6A, 6B en forme de tronc de cône de révolution, qui sont sensiblement identiques et s'étendent chacun longitudinalement entre une grande base une petite base respective, lesdits tronçons 6A, 6B s'étendant longitudinalement, dans la continuité d'un de l'autre, en étant reliés par leurs grandes bases respectives pour former une seule et même pièce d'un seul tenant, constituant le premier rouleau de laminage 6. Les deux tronçons 6A, 6B sont ainsi contigus et se rejoignent en leurs grandes bases respectives (qui sont de ce fait confondues) pour former une arête centrale dudit premier rouleau motorisé 6, qui correspond au diamètre maximal Dmax de ce dernier.

De préférence, afin d'obtenir les meilleurs résultats possibles, de la façon la plus simple possible, le deuxième rouleau motorisé 7 présente quant à lui une forme de révolution cylindrique, de sorte que ledit deuxième rouleau motorisé 7 présente avantageusement un diamètre sensiblement constant sur toute sa longueur. De préférence, le diamètre dudit deuxième rouleau motorisé 7 est sensiblement égal au diamètre minimal Dmin que présente le premier rouleau motorisé 6 à chacune de ses extrémités. Lesdits premier et deuxième rouleaux 6, 7 sont avantageusement de mêmes longueurs et disposés en vis-à-vis, de sorte qu'ils s'étendent sensiblement au droit l'un de l'autre, avec de préférence le premier rouleau motorisé 6 disposé au-dessus du deuxième rouleau motorisé 7.

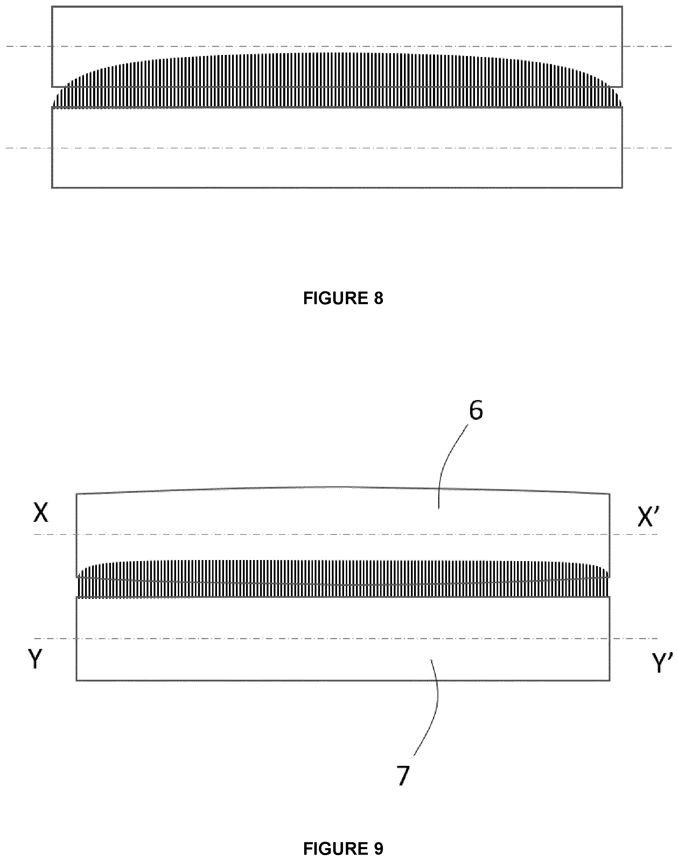

Dans ce mode de réalisation préférentiel, qui est illustré aux figures, les effets de bord lié à la présence des parois de l'enceinte formée par la cuve 2 sont compensés de manière particulièrement efficace, avec l'obtention d'un profil de pression (illustré de façon schématique par la figure 9) sensiblement uniforme sur toute la longueur des rouleaux 6, 7, au contraire d'une configuration mettant en oeuvre deux rouleaux de forme de révolution cylindrique, qui conduit à un profil de pression beaucoup plus hétérogène (illustré schématiquement par la figure 8).

Avantageusement, le rapport du diamètre de la grande base au diamètre de la petite base, pour chaque tronçon 6A, 6B, est compris entre 1,007 et 1,02. De préférence, lesdites tronçons 6A, 6B sont des tronçons en forme de tronc de cône de révolution de demi-angle a compris entre sensiblement 0,01° et 0,1° degrés, de façon encore plus préférentielle entre 0,03° et 0,07° degrés. Par exemple, le diamètre minimal Dmin est compris entre 137 et 138 mm, tandis que le diamètre maximal Dmax est compris entre 138,5 et 139,5 mm et que la longueur L de chaque tronçon 6A, 6B (qui correspond à la moitié de la longueur totale du premier rouleau 6) est comprise entre 627 et 629 mm.

Le léger bombement du premier rouleau 6, qui correspond aux valeurs précitées, en coopération de préférence avec un deuxième rouleau 7 au profil droit (forme de révolution cylindrique), permet d'obtenir un excellent résultat en termes d'uniformité de la distribution de la composition pâteuse dans toutes les buses d'extrusion 3, y compris celles situées aux extrémités du rang de buses 3, malgré la présence, indispensable, des parois latérales de la cuve 2.

Avantageusement, le dispositif 1 selon l'invention comprend un troisième rouleau motorisé de laminage 9, qui est disposé à l'aval desdits premier et deuxième rouleaux motorisés 6, 7 par rapport au sens de déplacement de la composition pâteuse au sein de la cuve 2, de sorte que lesdits premier et deuxième rouleaux motorisés 6, 7 sont interposés entre lesdites buses d'extrusion 3 et ledit troisième rouleau motorisé 9. Avantageusement, le troisième rouleau motorisé 9 est monté à rotation selon un troisième axe de rotation Z-Z', lequel s'étend avantageusement sensiblement parallèlement auxdits premier et deuxième axes de rotation X-X', Y-Y'. Comme illustré aux figures, ledit troisième axe de rotation Z-Z' s'inscrit dans un plan vertical qui est avantageusement distinct et distant du plan vertical dans lequel s'inscrivent préférentiellement lesdits premier et deuxième axes de rotation X-X', Y-Y'.

Avantageusement, lesdits deuxième et troisième rouleaux motorisés 7, 9 sont co-rotatifs, c'est-à-dire qu'ils tournent dans le même sens. Dans ce cas de figure préférentiel, le troisième rouleau motorisé de laminage 9 tourne selon un troisième sens de rotation S3 qui est sensiblement le même que le deuxième sens de rotation S2, et est donc avantageusement opposé au premier sens de rotation S1.

Le troisième rouleau 9 permet ainsi d'assurer un premier acheminement contrôlé de composition pâteuse en direction du premier entrefer 8 ménagé entre les premier et deuxième rouleaux motorisés de laminage 6, 7, avec un pré-laminage assuré par le passage entre le premier rouleau 6 et le troisième rouleau 9, plus précisément dans un deuxième entrefer 10 ménagé entre ces derniers. De préférence, le troisième rouleau 9 présente un diamètre supérieur à celui de chacun desdits premier et deuxième rouleaux motorisés 6, 7. La présence du troisième rouleau 9 permet d'exercer un premier calibrage de l'épaisseur du flux de composition pâteuse destiné à passer dans le premier entrefer 8 des premier et deuxième rouleaux 6, 7. Ceci permet de répartir les contraintes de laminage et d'augmenter la vitesse de production. Le premier et le troisième rouleau 6, 9 effectuent ainsi un pré-laminage, qui précède le laminage opéré par les premier et deuxième rouleaux 6, 7. Ceci permet une amélioration de la productivité et évite de soumettre la composition pâteuse à des efforts de compression excessifs qui pourraient la détériorer.

Avantageusement, le dispositif 1 comprend une première conformation concave 11 qui s'étend au moins sur ladite paroi avant 2B, à l'intérieur de la cuve 2, et épouse localement la forme dudit premier rouleau motorisé 6. La première conformation concave 11 se présente ainsi par exemple sous la forme d'une portion de surface de révolution dont le profil est conjugué à celui du premier rouleau 6. La première conformation concave 11 épouse ainsi localement le contour de révolution dudit premier rouleau 6, selon un secteur angulaire de recouvrement qui est par exemple au moins égal à 60°, de façon encore plus préférentielle au moins égale à 80°, et de façon encore plus préférentielle au moins égale à 90°, tout en étant à distance dudit premier rouleau 6 pour lui permettre de tourner selon le premier axe de rotation X-X'.

Comme illustré aux figures, la première conformation concave 11 se présente par exemple sous la forme d'une première empreinte ménagée à la surface de la paroi avant 2B, du côté intérieur de cette dernière (qui est disposé en regard de l'intérieur de la cuve 2) et qui suit le profil du premier rouleau 6, de sorte que le jeu existant entre le premier rouleau 6 et la première conformation concave 11 est suffisamment minime pour empêcher toute pénétration intempestive de composition pâteuse dans l'espace interstitiel qui sépare la paroi de la première conformation concave 11 (formée en l'espèce par la paroi avant 2B elle-même) et le premier rouleau 6.

Avantageusement, le dispositif 1 comprend une deuxième conformation concave 12 qui s'étend au moins sur ladite paroi avant 2B et/ou sur ledit fond 2A, à l'intérieur de la cuve 2, et épouse localement la forme dudit deuxième rouleau motorisé 7. De préférence, la forme de la deuxième conformation concave 12 est sensiblement analogue à celle de la première conformation concave 11, aux variations de profil près du fait de la différence de forme des premier et deuxième rouleaux motorisés 6, 7. Les première et deuxième conformations concaves 11, 12 sont avantageusement disposées de part et d'autres d'un plan médian qui est sensiblement perpendiculaire à la paroi avant 2B et qui passe par le milieu de la lumière 5. Dans le mode de réalisation illustré aux figures, la deuxième conformation concave 12 s'étend à la fois sur le fond 2A et sur la paroi avant 2B, c'est-à-dire qu'une partie de ladite deuxième conformation concave 12 s'étend au droit du fond 2A, tandis qu'une autre partie, contiguë à ladite première partie, s'étend au droit de la paroi avant 2B.

Comme illustré aux figures, la deuxième conformation concave 12 inclut par exemple une deuxième empreinte ménagée à la surface de la paroi avant 2B, du côté intérieur de cette dernière (qui est disposé en regard de l'intérieur de la cuve 2) et qui suit le profil du deuxième rouleau 7, de sorte que le jeu existant entre le deuxième rouleau 7 et la deuxième conformation concave 12 est suffisamment minime pour empêcher toute pénétration intempestive de composition pâteuse dans l'espace interstitiel qui sépare la paroi de la deuxième conformation concave 12 (formée en l'espèce par la paroi avant 2B elle-même) et le deuxième rouleau 7. La deuxième conformation concave inclut également de préférence une troisième empreinte qui s'étend dans le prolongement de la deuxième empreinte et qui est formée à la surface d'une pièce d'habillage du fond 2A.

Avantageusement, le dispositif 1 comprend par ailleurs une troisième conformation concave 13 qui s'étend au moins sur ladite paroi arrière 2C et/ou sur ledit fond 2A, à l'intérieur de la cuve 2, et épouse localement la forme dudit troisième rouleau motorisé 9. Avantageusement, comme illustré aux figures, la troisième conformation concave 13 entoure le troisième rouleau motorisé 9 sur un secteur angulaire qui de préférence excède 180°. La troisième conformation concave 13 est avantageusement contiguë à la deuxième conformation concave 12, de sorte à former avec cette dernière un profil qui épouse sensiblement continûment le deuxième rouleau motorisé 7 selon un secteur angulaire au moins égal à 180°, ainsi que le troisième rouleau motorisé 9 selon là encore un secteur angulaire au moins égal à 180°. Avantageusement, ladite troisième conformation concave 13 se prolonge, au droit de la paroi arrière 2C, par un panneau incliné 14 qui forme par exemple avec la paroi arrière 2C, qui est préférentiellement verticale, un angle β au moins égal à 30°, de préférence au moins égal à 45°. Le panneau incliné 14 permet ainsi de diriger la composition pâteuse, introduite par l'ouverture supérieure de la cuve 2, en direction du deuxième entrefer 10, afin de soumettre la composition pâteuse au processus de laminage, puis d'extrusion.

L'agencement exposé dans ce qui précède présente un caractère particulièrement fiable et compact. Il permet de mettre en oeuvre un processus de fabrication extrêmement simple, rapide et automatisé, selon lequel il suffit d'alimenter la cuve 2 en composition pâteuse, par son ouverture supérieure, pour que ladite composition pâteuse soit ensuite automatiquement soumise au laminage par les rouleaux 6, 7 puis à l'extrusion par les buses 3, avant de subir éventuellement, en sortie des buses 3, à l'extérieur de la cuve 2, une opération de découpe en portions élémentaires.

L'invention concerne également en tant que tel un procédé de fabrication de pâtes alimentaires destinées à être réchauffées et/ou cuites avant d'être consommées.

Ledit procédé selon l'invention est donc un procédé de pastification, pour fabriquer des pâtes alimentaires destinées à être réchauffées et/ou cuites avant d'être consommées. Le procédé en question peut être mis en oeuvre, conformément à un mode de réalisation préférentiel, au moyen du dispositif 1 de fabrication décrit dans ce qui précède. Dès lors, l'ensemble de la description qui précède concernant le dispositif 1 s'applique au procédé selon l'invention, et réciproquement la description qui suit relative au procédé selon l'invention s'applique au dispositif 1 précité.

Il est ceci étant parfaitement envisageable que le procédé de fabrication selon l'invention soit mis en oeuvre au moyen d'un dispositif de fabrication qui diffère de celui décrit ci-avant.

Dans ce qui suit, par souci de concision, le procédé décrit correspond à celui mis en oeuvre par le dispositif 1 de fabrication selon l'invention.

Le procédé en question comprend une étape de réception, dans la cuve 2, de la composition pâteuse à partir de laquelle les pâtes alimentaires sont destinées à être formées. Ladite composition pâteuse est avantageusement conforme à la description qui précède.

Le procédé comprend également une étape de laminage de ladite composition pâteuse, au moyen d'au moins le premier et le deuxième rouleau motorisé de laminage 6, 7 disposés à l'intérieur de la cuve 2, pour forcer la composition pâteuse contenue dans la cuve 2 à travers les buses d'extrusion 3 associées à ladite cuve 2. Ledit premier rouleau motorisé 6 présente une forme de révolution fuselée, comme déjà exposé dans ce qui précède.

Grâce à la mise en oeuvre d'un premier rouleau motorisé 6 de forme de révolution fuselée, les effets de bord liés à la contre-pression exercée sur la composition pâteuse par les parois de l'enceinte formée par la cuve 2 sont compensés, de sorte que les extrudats issus de chacune des buses d'extrusion 3 sont tous identiques, ce qui permet une production uniforme à cadence élevée.

Avantageusement, le procédé de fabrication selon l'invention comprend une étape préalable de fabrication de ladite composition pâteuse par malaxage et cuisson d'un mélange formé à partir d'au moins une farine et/ou d'une semoule d'au moins une céréale contenant des protéines capables de former du gluten d'une part et d'un liquide d'hydratation d'autre part. Avantageusement, ledit mélange inclut en outre des ingrédients supplémentaires, comme par exemple des flocons de tubercule de *Solanum tuberosum* déshydraté, et/ou des additifs ou adjuvants divers (oeufs, etc.), comme déjà exposé dans ce qui précède en relation avec le dispositif 1.

Avantageusement, le procédé comprend en outre une étape de formage de boulettes, boudins et/ou palets à partir de ladite composition pâteuse sortant desdites buses d'extrusion 3. Ladite étape de formage consiste ainsi à former lesdits boulettes, boudins et/ou palets à partir de l'extrudat de composition pâteuse issu des buses d'extrusion 3. L'étape de formage comprend par exemple une découpe de l'extrudat qui sort en continu des buses d'extrusion 3 en portions élémentaires, ladite découpe étant le cas échéant associée à un formage (par exemple par moulage) de chaque portion élémentaire d'extrudat ainsi découpée.

## Revendications

1. Dispositif (1) de fabrication de pâtes alimentaires destinées à être réchauffées et/ou cuites avant d'être consommées, ledit dispositif comprenant une cuve (2) conçue pour contenir une composition pâteuse à partir de laquelle les pâtes alimentaires sont destinées à être formées, des buses d'extrusion (3) associées à ladite cuve (2) pour être alimentées en composition pâteuse provenant de ladite cuve (2), ainsi qu'au moins un premier et un deuxième rouleau motorisé de laminage (6, 7) disposés à l'intérieur de la cuve (2) pour forcer la composition pâteuse contenue dans la cuve (2) à travers lesdites buses d'extrusion (3), ledit premier rouleau motorisé (6) présentant une forme de révolution fuselée.

2. Dispositif (1) de fabrication selon la revendication précédente **caractérisé en ce que** ledit premier rouleau motorisé (6) est disposé au-dessus dudit deuxième rouleau motorisé (7).

3. Dispositif (1) de fabrication selon l'une quelconque des revendications précédentes **caractérisé en ce que** lesdits premier et deuxième rouleaux motorisés de laminage (6, 7) sont contrarotatifs.

4. Dispositif (1) selon l'une quelconque des revendications précédentes **caractérisé en ce qu'**il comprend un troisième rouleau motorisé de laminage (9) disposé à l'aval desdits premier et deuxième rouleaux motorisés (6, 7) par rapport au sens de déplacement de la composition pâteuse au sein de la cuve (2), de sorte que lesdits premier et deuxième rouleaux motorisés (6, 7) sont interposés entre lesdites buses d'extrusion (3) et ledit troisième rouleau motorisé (9).

5. Dispositif (1) selon la revendication précédente **caractérisé en ce que** lesdits deuxième et troisième rouleaux motorisés (7, 9) sont co-rotatifs.

6. Dispositif (1) selon l'une quelconque des revendications précédentes **caractérisé en ce que** lesdites buses d'extrusion (3) sont disposées en rang les unes à côté et à distance des autres.

7. Dispositif (1) selon l'une quelconque des revendications précédentes **caractérisé en ce que** lesdits premier et deuxième rouleaux motorisés (6, 7) ménagent entre eux un premier entrefer qui s'étend sensiblement au droit desdites buses d'extrusion (3).

8. Dispositif (1) selon l'une quelconque des revendications précédentes **caractérisé en ce que** ladite cuve (2) comprend un fond (2A) à partir duquel s'élève au moins une paroi avant (2B) et une paroi arrière (2C) opposées.

9. Dispositif (1) selon la revendication précédente **caractérisé en ce qu'**il comprend une lumière (5) longiligne qui est ménagée à travers ladite paroi avant (2B) et est abouchée auxdites buses d'extrusion (3).

10. Dispositif (1) de fabrication selon l'une quelconque des revendications précédentes **caractérisé en ce que** ledit premier rouleau motorisé (6) comprend deux tronçons (6A, 6B) en forme de tronc de cône de révolution, qui sont sensiblement identiques et s'étendent chacun longitudinalement entre une grande base et une petite base respective, lesdits tronçons (6A, 6B) s'étendant longitudinalement dans la continuité l'un de l'autre en étant reliés par leurs grandes bases respectives.

11. Dispositif (1) de fabrication selon la revendication précédente **caractérisé en ce que** le rapport du diamètre de la grande base au diamètre de la petite base est compris entre 1,007 et 1,02.

12. Dispositif (1) de fabrication selon l'une quelconque des revendications précédentes **caractérisé en ce qu'**il comprend un poste de formage de boulettes, boudins et / ou palets à partir de ladite composition pâteuse, disposé en sortie desdites buses d'extrusion (3).

13. Procédé de fabrication de pâtes alimentaires destinées à être réchauffées et/ou cuites avant d'être consommées, ledit procédé comprenant une étape de réception, dans une cuve (2), d'une composition pâteuse à partir de laquelle les pâtes alimentaires sont destinées à être formées, ainsi qu'une étape de laminage de ladite composition pâteuse, au moyen d'au moins un premier et un deuxième rouleau motorisé de laminage (6, 7) disposés à l'intérieur de la cuve (2), pour forcer la composition pâteuse contenue dans la cuve (2) à travers des buses d'extrusion (3) associées à ladite cuve (2), ledit premier rouleau motorisé (6) présentant une forme de révolution fuselée.

14. Procédé de fabrication selon la revendication précédente **caractérisé en ce qu'**il comprend une étape préalable de fabrication de ladite composition pâteuse par malaxage et cuisson d'un mélange formé à partir au moins d'une farine et / ou d'une semoule d'au moins une céréale contenant des protéines capables de former du gluten et d'un liquide d'hydratation.

15. Procédé de fabrication selon l'une quelconque des revendications 13 et 14 **caractérisé en ce qu'**il comprend une étape de formage de boulettes, boudins et / ou palets à partir de ladite composition pâteuse sortant desdites buses d'extrusion (3).
